# EUROPEAN PATENT SPECIFICATION

(11) **EP 1 486 308 B1**
(45) Date of publication and mention of the grant of the patent: **13.05.2009**
(21) Application number: 04013302.7
(22) Date of filing: 05.06.2004
(51) Int. Cl.: B28D 7/02, B24C 9/00

(54) **Process for the correction treatment of the pulp in a granite-cutting unit**
Verfahren zur Gemischregelung von abrasivem Brei zum Schneiden von Granit
Procédé de contrôle de la composition de la pulpe abrasive utilisée dans un outil de coupage de granite

(30) Priority: 10.06.2003 IT vi20030113
(43) Date of publication of application: 15.12.2004
(73) Proprietor: Marmi Zenatelli S.A.S, 37020 Volargne (Verona) (IT)
(72) Inventor: Zenatelli, Giorgio, 37010 Pacengo di Lazise (Verona) (IT)
(74) Representative: Modiano, Micaela Nadia

(56) References cited:
- EP-A- 0 445 085
- EP-A- 1 314 523
- FR-A- 2 578 470
- FR-A- 2 704 455
- IT-B- 1 243 073
- US-A- 6 053 158

## Description

The present finding concerns a process for the correction treatment of the pulp in a granite-cutting unit.

The abrasive pulp, consisting of water - limewash - granite dust - waste from the blades and steel shots, the real "tool" of the cutting group, possibly with a non-metallic abrasive substance, specifically added, generally comes with a suspension of solid substances in a saturated aqueous Calcium hydroxide solution - (Ca(OH)₂) - where water represents about 2/3 in volume and slightly more than 1/3 in weight of the whole mixture.

Granite dust constitutes a substantial percentage, both in weight and in volume, of the abrasive pulp and has an average specific weight of about 2.65, against a specific weight of 1 of water, a specific weight of 7.5 of steel and a specific weight of 1.75 of the pulp itself; it follows from this that the dust constitutes 1/5 the volume and about 1/3 the weight of the pulp.

The granules of steel shots, which have an initial particle size distribution of between 0.5 and 1.5 mm, with repeated passages through the frame are gradually broken up or ground down, until they reach a size, fixed at the value of 0.3-0.4 mm (large shots), below which said granules (fine shots) are no longer considered useful to continue to cut with optimal speed.

The waste from the blades, which are worn down during cutting, consists of a "dust" of metallic particles with a maximum size of 1/10 microns.

The pulp circuit comprises a large pump that operates in a closed circuit, drawing the pulp from a pit and sending it, through piping, above the highest part of the frame, where a container takes care of distributing the pulp to the so-called "sprays", which sprinkle it over the blocks of granite and on the blades that are cutting.

The abrasive pulp then runs into the cuts formed by the blades and leaves spraying the whole block and the block-holding trolley, finally falling onto a lower hopper, where a duct takes it back into the pit.

In the piping that connects the pump to the container of the sprays branches are applied, each of which is equipped with an intercept valve, one of which is used for connection with the "drainage" apparatus, in the state of the art consisting of a cyclone; another of said branches is connected to the apparatuses for controlling the chemical-physical properties of the pulp in circulation.

In the cyclone, by centrifuge, the pulp divides into two fractions, since the steel shots tend to go onto the walls of the cyclone and fall to the bottom and are then once again collected in the pit, where they are put back into circulation by the pump; vice-versa, most of the water (which contains almost all of the granite dust, most of the shots that had become fine and barely abrasive, as well as the very fine waste from the blades) escapes at the top and becomes waste.

The most significant parameters that define the pulp are: viscosity, specific weight and values of the amount and size of the shots.

Viscosity has a great influence upon the cutting of granite since:
a) the pulp must penetrate all the way into the cut made by the blades, in a sufficient amount to continue with the cutting, which is mainly carried out by the steel shots, passing into the thin free space existing between the blades and the granite; if it is too viscous the pulp does not manage to pass entirely, work is lost and "its height diminishes", whereas if the pulp is not very viscous the large shots are not "supported" by the pulp itself and remains in the cut for a long time, accumulating under the blades, which tend to deviate, with the consequence of a bad cut;
b) in the separator cyclones, where the steel granules of a size advantageous for cutting are recovered by centrifugal action, if the viscosity is too high some of the useful shots do not manage to reach the wall and remain in the fluid, which goes out in the upper part of the apparatus, thus losing shots that are still useful whereas, vice-versa, when the pulp is not very viscous, an excessive amount of fine shots goes down to the bottom of the apparatus and wastefully goes back into the pit.

The value of the specific weight is mainly influenced by the amount of "iron" present in the mixture in the form of shots (large or fine) and iron dust (used blade) for which reason, in operation, when the control apparatus indicates a value of the specific weight of the pulp greater than the nominal value (about 1.7), so as not to reduce the performance of the frame it is necessary to intervene immediately, so as to take a percentage of the metallic component (fine shots) away from the mixture.

In the current state of the art, such an operation is realised with the use of the cyclone, which, however, has the drawback that, due to the way it operates, it inevitably also involves a variation in the value of the viscosity of the mixture, whereas such a value should always remain optimal.

Such a negative situation occurs, above all, during the cutting of blocks of particularly hard and/or abrasive material, as well as at the start of each frame or starting step of the frame, in which the pulp contains, as well as the pulp of the previous operation, also small amounts of fine shots and waste from the blades, deriving from the washing of the frame and deposited in the hopper, in the discharge pipe and in the pit.

Document EP 1 314 523 A2 discloses a sawing assembly for sawing marble and stone by using an abrasive slurry with steel shot.

The assembly comprises a collection well that is fed from a shot tank and from a lime tank and delivers abrasive slurry through a duct to sprinklers.

A separation cyclone is provided that is suitable to eliminate fines and steel shot from recovered mixture.

A fraction of the mixture fed to the cyclone can be fed to a viscosity analyser suitable to control inflow of new steel shot from the separate shot tank to the well.

Document EP 0 445 085 A2 teaches a process for washing and composition control of abrasive pulps for granite cutting in a sedimentation device.

It acknowledges that devices are also known with centrifugal cleaners.

It also acknowledges that, in alternative, other known processes provide for the magnetic separation of the metallic grit and it successive separation into fractions through mechanic filtration. Such new processes are deemed as having drawbacks due to the low reliability caused by clogging of the filters insufficient precision and capacity for separation.

The purpose of the present finding is that of realising a process for the correction treatment of the pulp in a granite-cutting unit, which allows the specific weight of the pulp to be taken back to nominal values, without changing the nominal value of the viscosity of the pulp itself.

Such a purpose is obtained with a process, according to the invention, as set forth in claim 1 and which is carried out in a unit as defined in claim 8. In particular advantageous effects of the claimed invention are achieved through the use of a magnetic iron-removal apparatus, applied on one of the branches present on the delivery duct of the pulp.

In the operative step, such a magnetic iron-removal apparatus has the task of completely separating the metallic component, large shots, fine shots and waste from the blades from the rest of the components of the mixture, which, thus purified, is discharged into the pit and pit back into circulation.

The unit according to the finding is completed with a vibrating sieve, which has the purpose of sieving the metallic particles of a size greater than a preset value, usually 0.3 mm, from the remaining metallic part; in practice, the large shots are recovered, whereas the fine shots and the iron dust are sent to the discharge for mud treatment or into an iron-collection tank.

The finding also foresees that the piping for the discharge of the cyclone and for the control apparatuses converge on the vibrating sieve, so as to be able to completely recover the particles of a size greater than 0.3 mm, consisting of large shots and of non-metallic abrasive substance, when it has been added into the pulp to improve the cutting characteristics, which would otherwise have been sent to the discharge, with substantial economic consequences.

Operatively, the finding foresees that, in a first embodiment of the unit, the iron-removal apparatus is placed upstream of the vibrating sieve, whereas, in a second embodiment, when it is required that the recovered metallic component that has been but back into circulation must not be magnetised, the aforementioned iron-removal apparatus is arranged downstream of the vibrating sieve.

The finding shall be better understood through the description of some possible embodiments, given only as a non-limiting example, with the help of the attached tables of drawings, where:
- fig. 1 (Table I) represents a diagram of a first embodiment of the unit, for realising the process according to the finding;
- fig. 2 (Table II) represents a diagram of a second embodiment of the unit, for realising the process according to the finding;
- fig. 3 (Table III) represents a diagram of a third embodiment of the unit, for realising the process according to the finding;

As can be seen in the figures, the pulp 1 contained in the pit 2, through a pump 3, is thrusted through the duct 4 up to the sprays 5, which sprinkle the block of granite 6 being cut.

On the duct 4 branches are formed, equipped with intercept valves 7, to which at least the cyclone 8 and the control apparatus 9 are connected, all according to *per* se known methods.

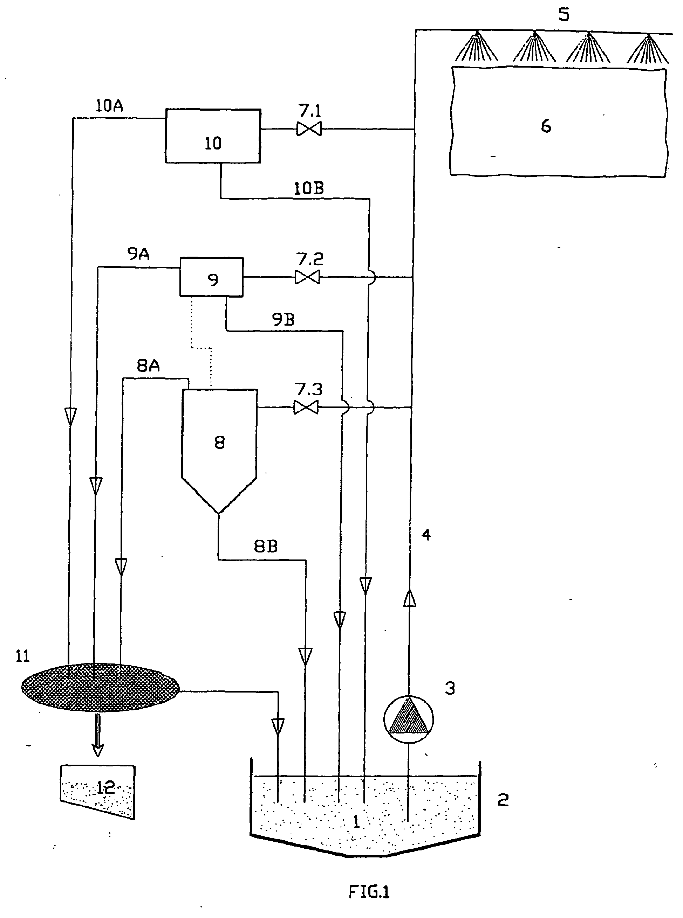

As can be seen in fig. 1, in a first embodiment of the process according to the finding, a magnetic iron-removal apparatus 10 is connected onto a branch, equipped with the intercept valve 7.1, of the duct 4 of the pulp.

In the operative step, the cyclone 8 separates the pulp going in, regulated by the intercept valve 7.3, into two flows:
- a first over flow 8A consisting of fine shots "Gf", waste from the blades "S1", a lot of water "H", almost all of the granite dust "Sg" and almost all of the non-metallic abrasive substance "A", if present;
- a second under flow 8B with the outlet of the large fraction, consisting almost entirely of large shots "Gr", a little water "H" and a little granite dust "Sg", which is conveyed directly into the pit 2 and put back into circulation by the circulation pump.

In the operative step, the magnetic iron-removal apparatus 10 separates the pulp going in, regulated by the valve 7.1, into two flows:
- a first flow 10A, that collects all of the metallic component present in the mixture, i.e. the shots, fine and large "Gf+Gr" and the waste from the blades "S1";
- a second flow 10B, which collects the mixture thus purified, thus containing water "H", granite dust "Sg" and non-metallic abrasive substance "A", which is conveyed directly into the pit and put back into circulation.

As can be seen again in fig. 1, the two flows 8A and 10A, of the cyclone 8 and of the magnetic iron-removal apparatus 10 respectively, are conveyed onto a vibrating sieve 11, which takes care of the mechanical separation of the particles present in the two flows, of a size greater than 0.3 mm, from the rest of the mixture, which is discharged into the collection tank 12.

To further increase the yield of the unit the plant foresees that the flow "9A" of the control apparatus 9 is also conveyed onto the vibrating sieve 11 so as to recover, after measuring, the possible large shots "Gr", which have not been discharged with the flow "9B" of the "wet iron", which is conveyed directly into the pit 2.

In practice, with the introduction of the vibrating sieve 11 and the conveying onto it of the aforementioned three flows 8A, 9A and 10A, it is thus possible to also recover and definitively put back into circulation in the pit 2 the part of large shots "Gr" that otherwise would have gone to the discharge, as well as it being possible to also recover a substantial percentage of non-metallic abrasive substance "A", with unquestionable positive aspects from the economic point of view.

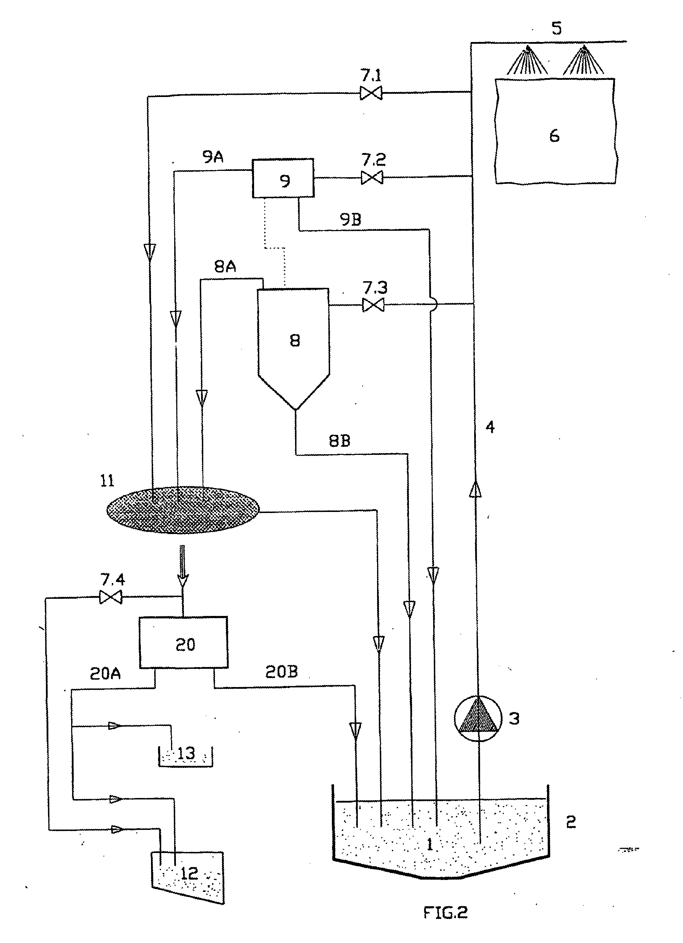

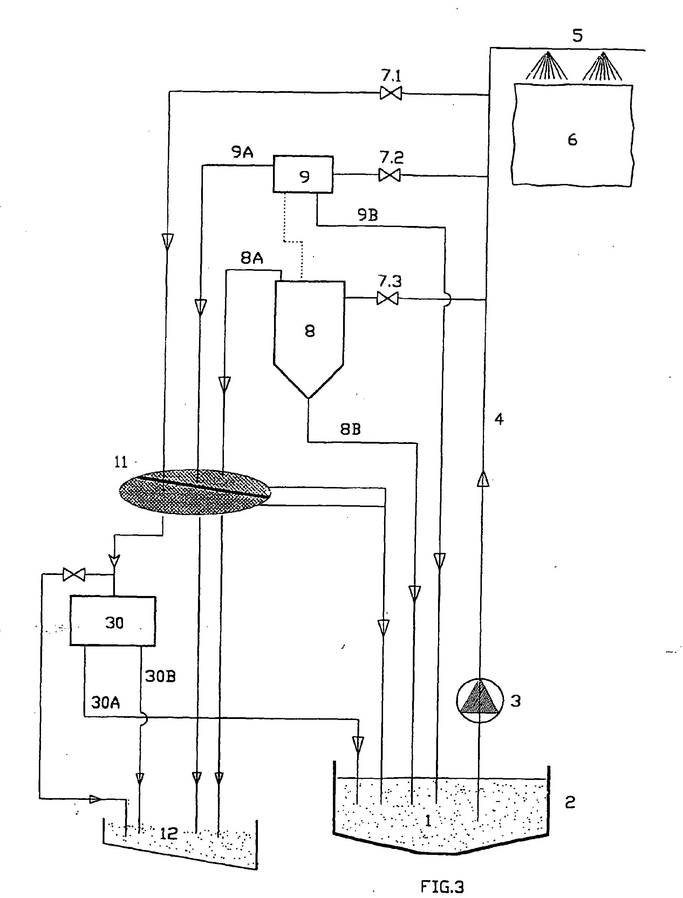

As can be seen in figures 2 and 3, in the second embodiment of the unit according to the finding a branch is foreseen, intercepted by the valve 7.1, which conveys a flow of pulp directly from the duct 4 to the vibrating sieve 11; the iron-removal apparatus 20-30 is positioned downstream of the aforementioned vibrating sieve; in such a way one can separate the metallic component of a size greater than 0.3mm, i.e. the large shots "Gr" are recovered to be reused without them being magnetised.

Specifically, as can be seen in fig. 2, in a second embodiment of the process according to the finding, the iron-removal apparatus 20, positioned downstream of the vibrating sieve 11, collects all of the pulp that is not held by the sieving action of the vibrating sieve 11, i.e. the particles of a size smaller than 0.3 mm, that is fine shots "Gf", waste from the blades "S1", non-metallic abrasive substance "A", granite dust "Sg" and water "H" and divides it into two flows:
- a first flow 20A, which collects the metallic component of a size smaller than 0.3 mm, which can be collected in an iron collection container 13 or discharged into the collection tank 12;
- a second flow 20B, which collects all of the mixture, without the metallic component, which is sent to the pit 2 for recirculation.

Again specifically, as can be seen in fig. 3, in a third embodiment of the process according to the finding, the iron-removal apparatus 30, again positioned downstream of the vibrating sieve 11, of the type that has two sieving chambers, is fed only by the flow of the pulp conveyed by the branch regulated by the valve 7.1 and divides it into two flows:
- a first flow 30A, which collects the mixture without the metallic component and which is sent to the pit 2;
- a second flow 30B, made up of the metallic component, consisting of fine shots and waste from the blades (Gf+Sl) which is sent into the collection tank 12.

Embodiments different to the one described are also possible, according to the size and functional characteristics of the unit, without, for this reason, departing from the scope of the following claims.

## Claims

1. A process for the correction treatment in a granite-cutting unit of an abrasive pulp (1) that comprises, in suspension, an amount of iron in the form of shots and dust,
the cutting unit comprising: a pit (2) for abrasive pulp (1); a cyclone (8) for dividing the pulp (1) by centrifugation in two fractions; a magnetic iron-removal apparatus (10, 20, 30) for separating metallic component from the pulp (1); a vibrating sieve (11) for sieving metallic particles of a size greater than a preset value ; a control apparatus (9) suitable to indicate a value of the specific weight of the pulp (1) in operation; a pump (3); and a duct (4) connecting said pit (2) to sprays (5) suitable to spray onto the granite (6) to be cut the pulp (1) pushed through the duct (4) by said pump (3), said duct (4) having branches that are provided with respective on-off valves (7.1, 7.2, 7.3) and through connect the duct (4) for feeding pulp (1) pushed by said pump (3) to said cyclone (8), to said control apparatus (9) and to said vibrating sieve (11) and iron-removal apparatus (10), said vibrating sieve (11) being located upstream or downstream of said magnetic iron removal apparatus (10, 20, 30) and being connected in a series connection (10A, 20B, 30A) to the magnetic iron removal apparatus (10, 20, 30) and to said pit (2), and said cyclone (8) being connected in a first series connection (8A) to said vibrating sieve (11) for sending thereto one of said two divided fractions and being provided with a second connection (8B) to said pit (2) for recirculation of the other of the two divided fractions;
the process comprising the steps for:
- detection by way of said control apparatus (9) of a specific weight of the pulp (1) in operation;
and when the detected specific weight of the pulp (1) in operation is changed so as to be different from a preset nominal value,
- taking back to the preset nominal value the changed specific weight of the pulp (1)
* by way of a conveyance (8A, 9A, 10A) of the pulp (1), pushed by said pump (3) through a respective said valve (7.1, 7.2, 7.3) in said cyclone (8) and control apparatus (9) and vibrating sieve (11) and iron-removal apparatus (10), and sieving separation of large shots that have a size greater than 0.3 mm from the pulp (1), the separated large shots being recovered into said pit (2) and the fine shots with smaller size which are metallic being discharged (12) or collected (13); and
* by way of conveyance (20B, 30A) into said pit (2) for recirculation of the fine shots that are non-metallic and are separated from the pulp (1) pushed by said pump (3) through a respective said valve (7.1, 7.2, 7.3) to said cyclone (8), control apparatus (9) and vibrating sieve (11) and iron-removal apparatus (10);
wherein said step for taking back to the preset nominal value the changed specific weight of the pulp (1) is carried out without changing the optimal value of the viscosity of the pulp (1) itself that is the viscosity value at which the pulp (1) is able to penetrate all the way into a cut made by a blade of the cutting unit in the granite (6) and is also able to support the shots having size greater than 0.3 mm by preventing remaining in the cut and accumulation thereof under the blade.

2. Process according to claim 1, **characterised in that,** when said vibrating sieve (11) is located downstream of said magnetic iron removal apparatus (10), said magnetic iron-removal apparatus (10) separates the pulp going in into two flows: a first flow (10A), that collects all of the metallic component (Gr, Gf,) present in the mixture and the waste (S1) from the blades of the cutting unit and a second flow (10B) consisting of the mixture thus purified, the second flow (10B) containing water (H), granite dust (Sg) and part of the non-metallic abrasive substance (A), which is conveyed directly into the pit (2) and put back into circulation.

3. Process according to claim 2, **characterised** that the flow (10A) going out from the magnetic iron-removal apparatus (10) is conveyed onto the vibrating sieve (11), which performs the mechanical separation of the metallic particles constituting the large shots of a size of greater than 0.3 mm from the rest of the mixture.

4. Process according to one of the previous claims, **characterised in that** the flows (8A) and (9A) going out, respectively from the cyclone (8) and from the control apparatus (9), are conveyed onto the vibrating sieve (11), which performs holding of the particles, mainly consisting of large shots, of a size of greater than 0.3 mm.

5. Process according to claim 1, wherein said vibrating sieve (11) is located upstream of said magnetic iron removal apparatus (20, 30), comprising conveying through a said branch, intercepted by a respective one (7.1) of said valves, a flow of pulp (1) directly from the duct (4) to the vibrating sieve (11).

6. Process according to claim 5, **characterised in that** said iron-removal apparatus (20) that is positioned downstream of the vibrating sieves (11), collects all of the pulp that is not held by the sieving action of said vibrating sieve (11), i.e. particles of a size smaller than 0.3 mm, that is fine shots (Gf), waste from the blades (S1) of the cutting unit, non-metallic abrasive substance (A), granite dust (Sg) and water (H) and divides the collected pulp into two flows: a first flow (20A), which collects the metallic component (Gf) of a size smaller than 0.3 mm, which is collected in an iron collection container (13) or discharged into a collection tank (12) and a second flow (20B), which collects all of the pulp mixture, without the metallic component, which is sent to the pit (2) for recirculation.

7. Process according to claim 5, comprising providing the iron-removal apparatus (30) that is positioned downstream of the vibrating sieve (11), of a type that has two sieving chambers fed only by the flow of pulp conveyed by the branch intercepted by said respective valve (7.1) whereby to divide said flow of pulp (1) into two flows: a first flow (30A), which collects the pulp mixture without the metallic component and which is sent for recovery to the pit (2) and a second flow (30B), made up of the metallic component containing fine shots of a size smaller than 0.3 mm (Gf) and waste (S 1) from the blades of the cutting unit, which is sent into the collection tank (12).

8. A granite-cutting unit for cutting granite with the use of an abrasive pulp (1) suitable for carrying out the correction treatment process of the pulp as set forth in claims 1-7, comprising: a pit (2) for abrasive pulp (1); a cyclone (8) for dividing the pulp (1) by centrifugation in two fractions; a magnetic iron-removal apparatus (10, 20, 30) for separating metallic component from the pulp (1); a vibrating sieve (11) for sieving metallic particles of a size greater than a preset value and separate them into large shots that have a size greater than 0.3 mm and fine shots with smaller size; a control apparatus (9) suitable to indicate a value of the specific weight of the pulp (1) in operation; a pump (3); and a duct (4) connecting said pit (2) to sprays (5) suitable to spray onto the granite (6) to be cut the pulp (1) pushed through the duct (4) by said pump (3); wherein said duct (4) has branches that are provided with respective on-off valves (7.1, 7.2, 7.3) and connect the duct (4) to said cyclone (8), to said control apparatus (9) and to said vibrating sieve (11) and iron-removal apparatus (10) for feeding the pulp (1) pushed trough by said pump (3) thereto, said vibrating sieve (11) being located upstream or downstream of said magnetic iron removal apparatus (10, 20, 30) and being connected in a series connection (10A, 20B, 30A) to the magnetic iron removal apparatus (10, 20, 30) and to said pit (2), and said cyclone (8) being connected in a first series connection (8A) to said vibrating sieve (11) for sending thereto one of said two divided fractions and being provided with a second connection (8B) to said pit (2) for recirculation of the other of the two divided fractions;
whereby the large shots being separated onto said vibrating sieve (11) are recoverable into said pit (2), the fine shots which are metallic can be discharged (12) or collected (13), and the fine shots that are non-metallic and are separated from the pulp (1) pushed by said pump (3) through a respective said valve (7.1, 7.2, 7.3) in said cyclone (8) control apparatus (9) and vibrating sieve (11) and iron-removal apparatus (10) are conveyable to said pit (2) for recirculation.

9. The cutting unit according to claim 8, **characterized in that** the iron-removal apparatus (30) has two sieving chambers whereby to divide said flow of pulp into two flows.

## Patentansprüche

1. Ein Verfahren zur Korrekturbehandlung, in einer Einheit zum Schneiden von Granit, eines abrasiven Breis (1), der, in Suspension, eine Menge an Eisen in Form von Granalien und Staub umfasst,
wobei die Schneideeinheit Folgendes umfasst: eine Grube (2) für abrasiven Brei (1); einen Zyklon (8), um den Brei (1) durch Zentrifugation in zwei Fraktionen zu teilen; eine magnetische Vorrichtung (10, 20, 30) zum Entfernen von Eisen, um die metallische Komponente vom Brei (1) zu trennen; ein vibrierendes Sieb (11) zum Aussieben metallischer Partikel von einer Größe, die größer ist als ein vordefinierter Wert; eine Steuervorrichtung (9), die geeignet ist, um einen Wert des spezifischen Gewichtes des Breis (1) im Betrieb anzuzeigen; eine Pumpe (3); und eine Leitung (4), welche die Grube (2) mit Spritzdüsen (5) verbindet, die geeignet sind, den Brei (1), der von der Pumpe (3) durch die Leitung (4) geschoben wird, auf das zu schneidende Granit (6) zu sprühen, wobei die Leitung (4) Verzweigungen hat, die mit entsprechenden Schaltventilen (7.1, 7.2, 7.3) versehen sind und die die Leitung (4) zur Zuführung von Brei (1), der von der Pumpe (3) durchgeschoben wird, mit dem Zyklon (8), mit der Steuervorrichtung (9) und mit dem vibrierenden Sieb (11) und der Vorrichtung (10) zum Entfernen von Eisen verbinden, wobei das vibrierende Sieb (11) sich stromaufwärts oder stromabwärts von der magnetischen Vorrichtung (10, 20, 30) zum Entfernen von Eisen befindet und in einer seriellen Verbindung (10A, 20B, 30A) mit der magnetischen Vorrichtung (10, 20, 30) zum Entfernen von Eisen und mit der Grube (2) verbunden ist und wobei der Zyklon (8) in einer ersten seriellen Verbindung (8A) mit dem vibrierenden Sieb (11) verbunden ist, um eine der beiden getrennten Fraktionen dorthin zu leiten, und zur Rezirkulation der anderen der beiden getrennten Fraktionen mit einer zweiten Verbindung (8B) zur Grube (2) ausgestattet ist;
wobei das Verfahren die Schritte umfasst für:
- die Erfassung, durch die Steuervorrichtung (9), eines spezifischen Gewichtes des Breis (1) im Betrieb;
und wenn das erfasste spezifische Gewicht des Breis (1) im Betrieb geändert wird, so dass sie sich von einem voreingestellten Nennwert unterscheidet,
- die Rückführung des geänderten spezifischen Gewichtes des Breis (1) auf den voreingestellten Nennwert
* durch eine Zufuhr (8A, 9A, 10A) des Breis (1), der von der Pumpe (3) geschoben wird, durch ein entsprechendes der Ventile (7.1, 7.2, 7.3) in den Zyklon (8) und die Steuervorrichtung (9) und das vibrierende Sieb (11) und die Vorrichtung (10) zum Entfernen von Eisen und Siebtrennung großer Granalien, die eine Größe von mehr als 0,3 mm haben, aus dem Brei (1),
wobei die abgetrennten großen Granalien in die Grube (2) wiedergewonnen werden und die feinen Granalien mit geringerer Größe, die metallisch sind, ausgetragen (12) oder gesammelt (13) werden; und
* durch Zufuhr (20B, 30A) in die Grube (2) zur Rezirkulation der feinen Granalien, die nicht metallisch sind und die aus dem Brei (1) abgetrennt werden, und zwar geschoben von der Pumpe (3) durch ein entsprechendes Ventil (7.1, 7.2, 7.3) zu dem Zyklon (8), der Steuervorrichtung (9) und dem vibrierenden Sieb (11) und der Vorrichtung (10) zum Entfernen von Eisen;
worin der Schritt für die Rückführung des geänderten spezifischen Gewichtes des Breis (1) auf den voreingestellten Nennwert durchgeführt wird ohne Änderung des optimalen Werts der Viskosität des Breis (1) selbst, das heißt, des Viskositätswerts, bei dem der Brei (1) vollständig in einen Schnitt eindringen kann, der von einer Klinge der Schneideeinheit in den Granit (6) gemacht wird, und auch die Granalien tragen kann, die größer sind als 0,3 mm, indem verhindert wird, dass sie in dem Schnitt bleiben und sich unter der Klinge sammeln.

2. Das Verfahren gemäß Anspruch 1, **dadurch gekennzeichnet, dass,** wenn sich das vibrierende Sieb (11) stromabwärts von der magnetischen Vorrichtung (10) zum Entfernen von Eisen befindet, die magnetische Vorrichtung (10) zum Entfernen von Eisen den eingehenden Brei in zwei Ströme aufteilt; einen ersten Strom (10A), der die gesamte metallische Komponente (Gr, Gf), die in der Mischung vorhanden ist, und den Abfall (S1) von den Klingen der Schneideeinheit einsammelt, und einen zweiten Strom (10B), der aus der so gereinigten Mischung besteht, wobei der zweite Strom (10B) Wasser (H), Granitstaub (Sg) und einen Teil der nicht metallischen abrasiven Substanz (A) enthält, der direkt in die Grube (2) befördert und in den Kreislauf rezirkuliert wird.

3. Das Verfahren gemäß Anspruch 2, **dadurch gekennzeichnet, dass** der Strom (10A), der von der magnetischen Vorrichtung (10) zum Entfernen von Eisen ausgeht, zum vibrierenden Sieb (11) hin befördert wird, welches die mechanische Trennung der Metallpartikel, welche die großen Granalien mit einer Größe von mehr als 0,3 mm bilden, vom Rest der Mischung durchführt.

4. Das Verfahren gemäß einem der vorhergehenden Ansprüche, **dadurch gekennzeichnet, dass** die Ströme (8A) und (9A), die vom Zyklon (8) beziehungsweise von der Steuervorrichtung (9) ausgehen, auf das vibrierende Sieb (11) befördert werden, welches das Halten der Partikel durchführt, die hauptsächlich aus großen Granalien von einer Größe von mehr als 0,3 mm bestehen.

5. Das Verfahren gemäß Anspruch 1, worin das vibrierende Sieb (11) sich stromaufwärts von der magnetischen Vorrichtung (20, 30) zum Entfernen von Eisen befindet, umfassend das Fördern durch einen der Zweige, unterbrochen von einem entsprechenden (7.1) der Ventile, eines Stroms von Brei (1) direkt von der Leitung (4) zum vibrierende Sieb (11).

6. Das Verfahren gemäß Anspruch 5, **dadurch gekennzeichnet, dass** die Vorrichtung (20) zum Entfernen von Eisen, die sich stromabwärts von den vibrierenden Sieben (11) befindet, den gesamten Brei sammelt, der nicht von der Siebwirkung der vibrierenden Siebe (11) zurückgehalten wird, das heißt Partikel von einer Größe von weniger als 0,3 mm, das heißt feine Granalien (Gf), Abfall von den Klingen (S1) der Schneideeinheit, nicht metallische abrasive Substanz (A), Granitstaub (Sg) und Wasser (H), und den gesammelten Brei in zwei Ströme aufteilt: einen ersten Strom (20A), der die Metallkomponente (Gf) von einer Größe von weniger als 0,3 mm sammelt, die in einem Eisen-Sammelbehälter (13) gesammelt wird oder in einen Sammeltank (12) ausgetragen wird, und einen zweiten Strom (20B), der die gesamte Breimischung, ohne die Metallkomponente, sammelt, die zur Rezirkulation in die Grube (2) geleitet wird.

7. Das Verfahren gemäß Anspruch 5, das die Bereitstellung der Vorrichtung (30) zum Entfernen von Eisen umfasst, die stromabwärts vom vibrierenden Sieb (11) positioniert ist, von einer Art, die zwei Siebkammern hat, welche nur von dem Strom von Brei gespeist werden, der von der Verzweigung befördert wird, welche von dem entsprechenden Ventil (7.1) aufgefangen wird, wodurch der Strom von Brei (1) in zwei Ströme unterteilt wird: einen ersten Strom (30A), der die Breimischung ohne die Metallkomponente sammelt und zur Wiedergewinngung in die Grube (2) geleitet wird, und einen zweiten Strom (30B), bestehend aus der Metallkomponente, der feine Granalien von einer Größe von weniger als 0,3 mm (Gf) und Abfall (S1) von den Klingen der Schneideeinheit enthält und der in den Sammeltank (12) geleitet wird.

8. Eine Granitschneideeinheit zum Schneiden von Granit unter Verwendung eines abrasiven Breis (1), geeignet zur Durchführung des Korrekturbehandlungsverfahrens des Breis wie in den Ansprüchen 1-7 ausgeführt, die Folgendes umfasst: eine Grube (2) für abrasiven Brei (1); einen Zyklon (8) zur Aufteilung des Breis (1) in zwei Fraktionen durch Zentrifugation; eine magnetische Vorrichtung (10, 20, 30) zum Entfernen von Eisen zum Abtrennen der Metallkomponente aus dem Brei (1); ein vibrierendes Sieb (11), um Metallpartikel mit einer Größe oberhalb eines vordefinierten Wertes auszusieben und sie in große Granalien mit einer Größe von mehr als 0,3 mm und feine Granalien mit einer geringeren Größe aufzuteilen; eine Steuervorrichtung (9), die geeignet ist, einen Wert des spezifischen Gewichtes des Breis (1) während des Betriebs anzuzeigen; eine Pumpe (3); und eine Leitung (4), die die Grube (2) mit Spritzdüsen (5) verbindet, die geeignet sind, den Brei (1), der von der Pumpe (3) durch die Leitung (4) geschoben wird, auf das zu schneidende Granit (6) zu sprühen; wobei die Leitung (4) Verzweigungen hat, die mit entsprechenden Schaltventilen (7.1, 7.2, 7.3) versehen sind und die Leitung (4) mit dem Zyklon (8), mit der Steuervorrichtung (9) und mit dem vibrierenden Sieb (11) und der Vorrichtung (10) zum Entfernen von Eisen verbinden, um den Brei (1), der von der Pumpe (3) dahin durchgeschoben wird, zuzuführen, wobei sich das vibrierende Sieb (11) stromaufwärts oder stromabwärts von der magnetischen Vorrichtung (10, 20, 30) zum Entfernen von Eisen befindet und in einer seriellen Verbindung (10A, 20B, 30A) mit der magnetischen Vorrichtung (10, 20, 30) zum Entfernen von Eisen und mit der Grube (2) verbunden ist, und der Zyklon (8) in einer ersten seriellen Verbindung (8A) mit dem vibrierenden Sieb (11) verbunden ist, um eine der beiden getrennten Fraktionen dorthin zu leiten, und zur Rezirkulation der anderen der beiden getrennten Fraktionen mit einer zweiten Verbindung (8B) zur Grube (2) ausgestattet ist;
wodurch die großen Granalien, die auf dem vibrierenden Sieb (11) abgetrennt werden, in der Grube (2) wiedergewonnen werden können, die feinen Granalien, die metallisch sind, ausgetragen (12) oder gesammelt (13) werden können, und die feinen Granalien, die nicht metallisch sind und die von dem Brei (1) angetrennt werden, zur Rezirkulation in die Grube (2) befördert werden können, und zwar geschoben von der Pumpe (3) durch ein entsprechendes Ventil (7.1, 7.2, 7.3) in den Zyklon (8), in die Steuervorrichtung (9) und in das vibrierende Sieb (11) und die Vorrichtung (10) zum Entfernen von Eisen.

9. Die Schneideeinheit gemäß Anspruch 8, **dadurch gekennzeichnet, dass** die Vorrichtung (30) zum Entfernen von Eisen zwei Siebkammern hat, wodurch der Strom von Brei in zwei Ströme aufgeteilt wird.

## Revendications

1. Procédé pour le traitement de correction, dans une unité de découpe de granit, d'une pulpe abrasive (1) qui comprend, en suspension, une quantité de fer sous la forme de grenailles et de poussière,
l'unité de découpe comportant : une fosse (2) pour de la pulpe abrasive (1), un cyclone (8) pour diviser la pulpe (1) par centrifugation en deux fractions, un dispositif d'enlèvement de fer magnétique (10, 20, 30) pour séparer un composant métallique de la pulpe (1), un tamis vibrant (11) pour tamiser des particules métalliques d'une dimension supérieure à une valeur préétablie, un dispositif de commande (9) adapté pour indiquer une valeur du poids spécifique de la pulpe (1) en fonctionnement, une pompe (3), et un conduit (4) reliant ladite fosse (2) à des pulvérisateurs (5) adaptés pour pulvériser, sur le granit (6) devant être découpé, la pulpe (1) poussée à travers le conduit (4) par ladite pompe (3), ledit conduit (4) ayant des branches qui sont munies de vannes marche-arrêt respectives (7.1, 7.2, 7.3), et connectant le conduit (4), pour alimenter la pulpe (1) poussée à travers par ladite pompe (3), audit cyclone (8), audit dispositif de commande (9) et audit tamis vibrant (11) et audit dispositif d'enlèvement de fer (10), ledit tamis vibrant (11) étant positionné en amont ou en aval dudit dispositif d'enlèvement de fer magnétique (10, 20, 30) et étant relié, dans une connexion en série (10A, 20B, 30A), au dispositif d'enlèvement de fer magnétique (10, 20, 30) et à ladite fosse (2), et ledit cyclone (8) étant relié dans une première connexion en série (8A) audit tamis vibrant (11) pour lui envoyer l'une desdites deux fractions divisées, et étant muni d'une seconde connexion (8B) à ladite fosse (2) pour une remise en circulation de l'autre des deux fractions divisées,
le procédé comprenant les étapes consistant à :
- détecter, par l'intermédiaire dudit dispositif de commande (9), un poids spécifique de la pulpe (1) en fonctionnement, et
lorsque le poids spécifique de la pulpe (1) détecté en fonctionnement est modifié de manière à être différent d'une valeur nominale préétablie,
- ramener à la valeur nominale préétablie le poids spécifique modifié de la pulpe (1)
* par l'intermédiaire d'un transport (8A, 9A, 10A) de la pulpe (1), poussée par ladite pompe (3) à travers une vanne respective (7.1, 7.2, 7.3) dans ledit cyclone (8), et ledit dispositif de commande (9), ledit tamis vibrant (11) et ledit dispositif d'enlèvement de fer (10), et séparer par tamisage des grandes grenailles qui ont une dimension supérieure à 0,3 mm de la pulpe (1), les grandes grenailles séparées étant récupérées dans ladite fosse (2), et les fines grenailles ayant une dimension inférieure qui sont métalliques étant évacuées (12) ou recueillies (13), et
* par l'intermédiaire d'un transport (20B, 30A) jusque dans ladite fosse (2) pour une remise en circulation des fines grenailles qui sont non métalliques et sont séparées de la pulpe (1) poussée par ladite pompe (3) à travers une vanne respective (7.1, 7.2, 7.3) vers ledit cyclone (8), ledit dispositif de commande (9), et ledit tamis vibrant (11) et ledit dispositif d'enlèvement de fer (10),
dans lequel ladite étape consistant à ramener à la valeur nominale préétablie le poids spécifique modifié de la pulpe (1) est effectuée sans modifier la valeur optimale de la viscosité de la pulpe (1) elle-même, c'est-à-dire la valeur de viscosité à laquelle la pulpe (1) est capable de pénétrer tout du long dans une entaille réalisée par une lame de l'unité de découpe dans le granit (6), et également capable de supporter les grenailles ayant une dimension supérieure à 0,3 mm en les empêchant de rester dans l'entaille, et de s'accumuler sous la lame.

2. Procédé selon la revendication 1, **caractérisée en ce que** lorsque ledit tamis vibrant (11) est positionné en aval dudit dispositif d'enlèvement de fer magnétique (10), ledit dispositif d'enlèvement de fer magnétique (10) sépare la pulpe s'écoulant en deux écoulements : un premier écoulement (10A), qui recueille la totalité du composant métallique (Gr, Gf) présent dans le mélange, et les déchets (S1) provenant des lames de l'unité de découpe, et un second écoulement (10B) constitué d'une mélange ainsi purifié, le second écoulement (10B) contenant de l'eau (H), de la poussière de granit (Sg) et une partie de la substance abrasive non métallique (A), qui est transporté directement jusque dans la fosse (2) et remis en circulation.

3. Procédé selon la revendication 2, **caractérisé en ce que** l'écoulement (10A) sortant du dispositif d'enlèvement de fer magnétique (10) est transporté jusque sur le tamis vibrant (11) qui effectue la séparation mécanique des particules métalliques, constituées des grandes grenailles d'une dimension supérieure à 0,3 mm, du reste du mélange.

4. Procédé selon l'une quelconque des revendications précédentes, **caractérisé en ce que** les écoulements (8A) et (9A) sortant respectivement du cyclone (8) et du dispositif de commande (9) sont transportés jusque sur le tamis vibrant (11), qui effectue un maintien des particules, constituées principalement de grandes grenailles, d'une dimension supérieure à 0,3 mm.

5. Procédé selon la revendication 1, dans lequel ledit tamis vibrant (11) est positionné en amont dudit dispositif d'enlèvement de fer magnétique (20, 30), comprenant le transport à travers une branche, interrompue par une (7.1) desdites vannes, d'un écoulement de pulpe (1) directement à partir du conduit (4) vers le tamis vibrant (11).

6. Procédé selon la revendication 5, **caractérisé en ce que** ledit dispositif d'enlèvement de fer (20) qui est positionné en aval du tamis vibrant (11) recueille la totalité de la pulpe qui n'est pas conservée par l'action de tamisage dudit tamis vibrant (11), c'est-à-dire des particules d'une dimension inférieure à 0,3 mm, c'est-à-dire des grenailles fines (Gf), des rejets provenant des lames (S1) de l'unité de découpe, une substance abrasive non métallique (A), de la poussière de granit (Sg) et de l'eau (H), et divise la pulpe recueillie en deux écoulements : un premier écoulement (20A), qui recueille le composant métallique (Gf) d'une dimension inférieure à 0,3 mm, qui est recueilli dans un conteneur de recueil de fer (13) ou évacué dans un réservoir de recueil (12), et un second écoulement (20B), qui recueille la totalité du mélange de pulpe, sans le composant métallique, qui est renvoyé vers la fosse (2) pour une remise en circulation.

7. Procédé selon la revendication 5, comprenant la fourniture du dispositif d'enlèvement de fer (30) qui est positionné en aval du tamis vibrant (11), d'un type qui a deux chambres de tamisage alimentées uniquement par l'écoulement de pulpe transporté par la branche interrompue par ladite vanne respective (7.1), pour diviser ainsi ledit écoulement de pulpe (1) en deux écoulements : un premier écoulement (30A), qui recueille le mélange de pulpe sans le composant métallique et qui est envoyé pour une récupération vers la fosse (2), et un second écoulement (30B), constitué du composant métallique contenant de fines grenailles d'une dimension inférieure à 0,3 mm (Gf) et des déchets (S1) provenant des lames de l'unité de découpe, qui est envoyé jusque dans le réservoir de recueil (12).

8. Unité de découpe de granite pour découper du granite en utilisant une pulpe abrasive (1) adaptée pour mettre en oeuvre le procédé de traitement de correction de la pulpe selon l'une quelconque des revendications 1 à 7, comportant : une fosse (2) pour de la pulpe abrasive (1), un cyclone (8) pour diviser la pulpe (1) par centrifugation en deux fractions, un dispositif d'enlèvement de fer magnétique (10, 20, 30) pour séparer un composant métallique de la pulpe (1), un tamis vibrant (11) pour tamiser des particules métalliques d'une dimension supérieure à une valeur préétablie, de les séparer en de grandes grenailles qui ont une dimension supérieure à 0,3 mm et en de fines grenailles de dimension inférieure; un dispositif de commande (9) adapté pour indiquer une valeur du poids spécifique de la pulpe (1) en fonctionnement, une pompe (3), et un conduit (4) reliant ladite fosse (2) à des pulvérisateurs(5) adaptés pour pulvériser, sur le granite (6) devant être découpé, la pulpe (1) poussée à travers le conduit (4) par ladite pompe (3), ledit conduit (4) ayant des branches qui sont munies de vannes marche-arrêt respectives (7.1, 7.2, 7.3) et connectant le conduit (4) audit cyclone (8), audit dispositif de commande (9), audit tamis vibrant (11) et audit dispositif d'enlèvement de fer (10), pour alimenter la pulpe (1) poussée à travers par ladite pompe (3), ledit tamis vibrant (11) étant positionné en amont ou en aval dudit dispositif d'enlèvement de fer magnétique (10, 20, 30) et étant relié, dans une connexion en série (10A, 20B, 30A), au dispositif d'enlèvement de fer magnétique (10, 20, 30) et à ladite fosse (2), et ledit cyclone (8) étant relié, dans une première connexion en série (8A), audit tamis vibrant (11), pour lui envoyer l'une desdites deux fractions divisées et étant muni d'une seconde connexion (82) à ladite fosse (2) pour une remise en circulation de l'autre des deux fractions divisées,
de sorte que les grandes grenailles séparées sur ledit tamis vibrant (11) sont récupérables dans ladite fosse (2), les fines grenailles qui sont métalliques peuvent être évacuées (12) ou recueillies (13), et les fines grenailles qui sont métalliques et sont séparées de la pulpe (1) poussée par ladite pompe (3) à travers une vanne respective (7.1, 7.2, 7.3) dans ledit cyclone (8), ledit dispositif de commande (9), ledit tamis vibrant (11) et ledit dispositif d'enlèvement de fer (10), peuvent être transportés vers ladite fosse (2) pour remise en circulation.

9. Unité de découpe selon la revendication 8, **caractérisée en ce que** le dispositif d'enlèvement de fer (30) a deux chambres de tamisage, pour diviser ainsi ledit écoulement de pulpe en deux écoulements.
